**Europäisches Patentamt**

(19) **European Patent Office**

**Office européen des brevets**

(11) Publication number: **0 110 319**

**B1**

(12) **EUROPEAN PATENT SPECIFICATION**

(45) Date of publication of patent specification: **24.06.87**

(51) Int. Cl.⁴: **A 22 C 25/14**

(21) Application number: **83111729.6**

(22) Date of filing: **23.11.83**

---

(54) **An apparatus for cutting fish heads.**

---

(30) Priority: **26.11.82 DK 5293/82**

(43) Date of publication of application:
**13.06.84 Bulletin 84/24**

(45) Publication of the grant of the patent:
**24.06.87 Bulletin 87/26**

(84) Designated Contracting States:
**BE DE FR GB LU NL SE**

(56) References cited:
**DE-A-2 855 127**
**DE-B-1 177 783**
**DE-B-1 292 340**
**DE-B-2 133 680**
**DK-A- 637 974**
**FR-A-2 276 786**
**US-A-2 292 696**

(73) Proprietor: **KVIKK s.f.**
**Ingolfsstraeti 1a**
**Reykjavik (IS)**

(72) Inventor: **Pálmason, Jón Arnar**
**Austurberg 12**
**Reykjavik (IS)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention refers to an apparatus for cutting fish heads as disclosed in the preamble of claim 1. Such an apparatus is known from DK—A—6379/74.

In the aforementioned reference an apparatus for cutting fish heads is disclosed, in which the fish heads are supported by two carrying pins that project into the eyes of the fish head. The fish heads are then reciprocated to and from cutting knives by the reciprocating arm on which the two carrying pins are mounted. Due to this kind of movement, the processing period for one fish head is six seconds which is rather slow. Furthermore, due to the fixed distance between the carrying pins, the apparatus is unable to process fish heads of varying sizes.

From FR—A—22 76 786, an apparatus for cleaning and cutting fish is known in which the fish are moved along the elongated path at which cutting and gill separating means are provided and wherein the fish is cut longitudinally by said cutting means extending into the path of movement of the fish and wherein said gill separating means separate gills from the fish heads. In this apparatus the fish in total is processed and is supported by a carriage moved along said elongated path.

From US—A—22 92 696, a fish head trimmer is known having an elongated guide member along which the heads are moved standing upright and being cut in a plane generally extending in the plane of the fish mouth.

It is the object of the present invention to provide an apparatus of the aforementioned kind which is able to process fish heads of varying sizes at high speed.

This object is attained by the characterising features of claim 1. Preferred embodiments of invention are subject of the dependent claims.

When the fish heads to be cut are fed manually or mechanically one by one to the supporting rod and are further brought into engagement with the moving means they are forced to follow said path of movement determined by the guide means past the cutting means so that the heads are cut by the latter. Dependent on the location of the cutting means in relation to the path of movement of the fish heads, the fish heads are split in two, cut up, for example along their nape and skull portion, or divided into other desired parts. Due to the structure of the apparatus, it is possible to cut fish heads of varying sizes, within limits, without any need for readjustment of the apparatus.

The guide means comprise an elongated rod member having a cross-sectional shape so that the fish heads may be threaded thereon so as to encircle the same and may be moved therealong in a distended condition. When the distended tubular fish heads are moved past suitably positioned cutting means, the fish heads may be cut longitudinally at desired positions. In an embodiment, the guide means comprise an elongated member defining a channel therein for slidingly receiving at least part of each fish head. As an example, the channel may receive the nape and skull portion of each fish head. Alternatively, the channel may be adapted to receive the chin and cheek portions of the heads.

The term "channel" used in this specification should be interpreted very broadly so as to include, for example, channels with various cross-sectional shapes and with part of the bottom wall of the channel cut away. The term should, for example, also comprise a path of movement defined by a pair of spaced, downwardly converging side walls or surfaces and without any bottom wall or surface.

The moving means by means of which the fish heads are consecutively moved along the path defined by the guide means and past the cutting means, may be of any suitable type, for example a reciprocating pushing member, which may push one head at the time along the guide means, towards and past the cutting means. In a preferred embodiment, however, the moving means comprise at least one endless belt or chain extending along the elongated member, said belt or chain having spikes extending from the outer surfaces thereof for engaging with adjacent portions of the fish heads moving along said elongated member. Fish heads may then be fed continuously to the elongated member at a head receiving position and be moved along the member towards and past the cutting means, and the spikes of the belts or chains may penetrate into adjacent portions of the fish heads so as to prevent any slipping between the belts and the heads. In order to allow the spikes to pierce the adjacent portions of the fish heads, at least one longitudinally extending groove or slot may be defined in the elongated member for receiving the outer free end of the spikes on the adjacent run of the belt or chain.

When the moving means engage with fish heads which are received in a channel defined in a channel member, they tend to flatten the tubular fish heads, so that it may be difficult to avoid total splitting of the fish heads, even when it is desired to cut only the nape and scull portions and not the chin portion. Therefore, it may be desired to move the tubular fish heads along the channel of the channel member in a distended condition, whereby the fish heads may be cut more accurately at the desired positions. Thus, according to the invention the guide means comprise a rod member as head supporting rail, said rod extending opposite to and along the channel in substantially parallel relationship therewith so as to allow the fish heads threaded on the rail to slide along the rod when they are moved along the channel by the moving means.

The guide means may also comprise head distending means located adjacent to the cutting means, for further distending the fish heads, especially in the general direction of extension of the cutting means or knives, when the fish heads pass the cutting means, whereby the fish heads may be cut more accurately.

Normally, the channel is upwardly open, and the cutting means may then extend upwardly into the channel through a first slot or opening defined in a bottom wall of the channel member. The cutting means may extend upwardly to a position between the bottom wall of the channel member and the lower part of the supporting rod, whereby the fish heads are cut along the portions engaging with the bottom wall of the channel member, for example along the nape and scull portions. In case it is desired to split the fish heads in two, the cutting means may extend further upwardly into a second opening or slot aligned with said first opening or slot and defined in the rod. In these cases, the cutting means are normally a single cutting knife extending along a central longitudinal plane of the channel.

In an alternative embodiment the cutting means comprise a pair of cutting knives defining an angle therebetween. This pair of cutting knives may then be positioned in relation to the path of movement of the fish heads so as to cut each fish head along two angularly positioned planes. Thus, for example, the two cutting knives may be positioned so as to cut the nape and scull portion from the chin and cheek portion of each fish head.

The cutting means may comprise means for separating gills from each fish head. Thus, when it is desired to separate the gills from the chin and cheek portion of each of the fish heads, the free end of the rail at which the fish heads are threaded, may be bifurcated. When a fish head is threaded on the supporting rod with the nape and scull portion directed downwardly, the bifurcated end of the rail is inserted into the mouth opening of the fish head, and each of the arms forming the bifurcated free end of the rail may then engage behind the adjacent gills, so that the connections between the gills and the chin portion are torn when the head is moved along the supporting rail by the moving means.

In order to separate the gills or possible gill residues from the chin portion of the head, the cutting means may comprise a cutting edge located at the upper side of the channel member cutting such gill residues adjacent to the tongue of each fish head passing along the rail.

As the guide means is in the form of an elongated rod member which is encircled by the fish heads moving therealong, the gill separating means may comprise a pair of gill cutting members arranged on either side of the elongated rod member so as to be movable between a retracted inoperative position and an extended cutting position. Thus, in their retracted position the gill cutting members do not substantially restrict movement of the fish head along the guide means. However, when a fish head has been moved to a position in which the gill cutting members are surrounded by the head, the cutting members may be moved to their extended cutting position and brought into engagement with the gills of the head, so that further movement of the fish head causes total or partial separation of the gills from the head. The cutting members may be moved between their retracted and extended positions by any suitable means, for example by electrical, pneumatic or hydraulic driving means. In the preferred embodiment, however, the gill cutting members are spring biased towards their retracted position, and each of the members may comprise an actuating arm for moving the cutting member to its extended cutting position when the arm is engaged by the leading end of a fish head moving along the rod member.

In order to facilitate feeding of the heads onto the rod, the free end portion of the supporting rod, where the heads are threaded on the rod, may be inclined upwardly, for example by about 20° in relation to a horizontal plane.

The channel member and the supporting rod may be fixedly, but adjustably mounted in relation to each other, and the lateral distance between the bottom wall of the channel member and the supporting rod may then be adjusted to the size of the fish heads being treated. However, the size of the fish heads may vary substantially, so that sorting of the heads with respect to size may be necessary. In order to avoid such sorting of the fish heads to be treated, the channel member may be mounted by resilient supporting means, whereby the transverse distance between the rail and the channel member may be increased by overcoming the bias of the resilient supporting means. Consequently, the distance between the rail and the channel may vary in accordance with the sizes of the fish heads being treated.

The invention will now be further described with reference to the drawings, wherein

Fig. 1 is a perspective side view of an embodiment of the apparatus according to the invention,

Fig. 2 is a perspective end view of the apparatus shown in Fig. 1,

Fig. 3 is a side view of a modified embodiment of the supporting rail,

Fig. 4 is a cross-sectional view along the line IV—IV in Fig. 3, and

Fig. 5 is a perspective side view of parts of a further embodiment of the apparatus according to the invention.

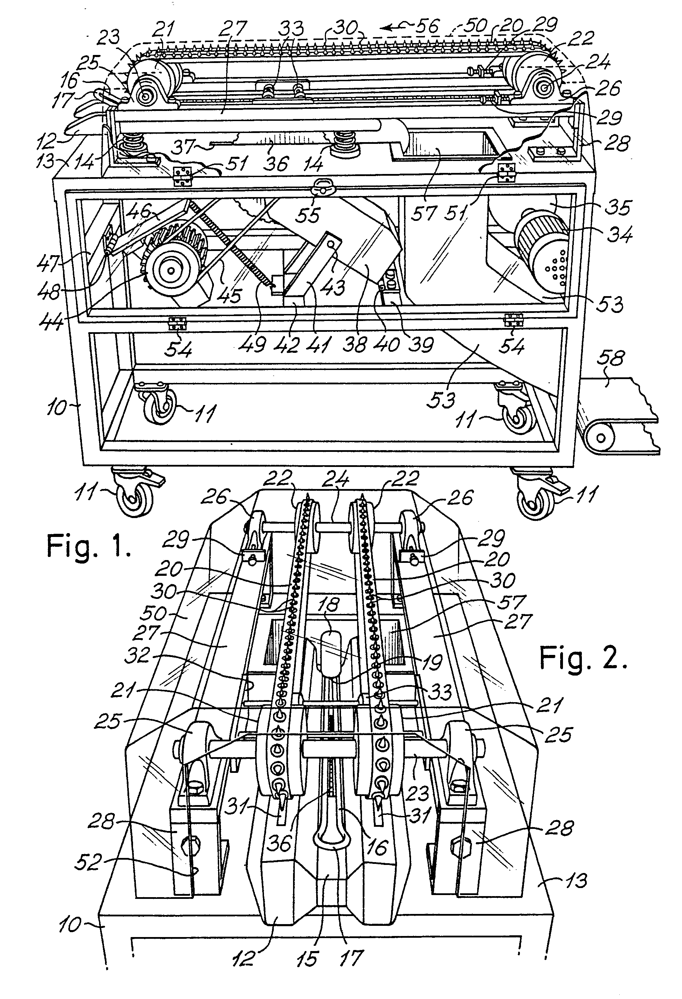

The apparatus shown in Figs. 1 and 2 for cutting fish heads comprises a frame 10 which is movably supported by caster wheels 11. A centrally arranged and longitudinally extending channel member 12 is arranged above an upper top panel 13 of the frame 10 by means of coil springs 14, or other resilient supporting means. The channel member 12 defines a longitudinally extending, upwardly open channel 15 therein for receiving fish heads to be cut. A head supporting rod or rail 16, which is fixedly mounted on the top panel 13, extends immediately above and along the channel 15. In the embodiment shown in Figs. 1 and 2, the supporting rail 16 is formed by a round bar having a circular bend 17 at its forward or inlet end, and a pair of slightly laterally spaced legs have their free ends interconnected by a connecting plate 18, which is arranged on the upper side of the legs and provided with a cutting edge 19. A pair of laterally spaced, endless V-belts 20 extend along the channel 15 on either side thereof. Each belt is passed around a pair of pulleys 21 and 22, which are fixedly mounted on shafts 23 and 24, respectively. Each of, the shafts 23 and 24 is rotatably mounted in a pair of bearings 25 and 26, respectively. The bearings are mounted on longitudinally extending supporting beams 27, each of which is mounted on the top panel 13 of the frame 10 by means of a pair of angular brackets 28. The longitudinal distance between the bearings 25 and 26 and, consequently, the tightness of the belts 20 is adjustable by means of adjusting members 29. Each of the belts 20 is provided with a plurality of outwardly extending spikes 30, and the spikes on the lower runs of the belts 20 may extend into a pair of narrow grooves or channels 31, which are formed in the upper surfaces of the channel member 12, and which extend on either side of the channel 15. The lower runs of the belts 20 and the spikes 30 thereon may be maintained in proper engagement with the grooves 31 by a hold-down device 32 comprising rollers 33 engaging with the upper sides of the lower runs of the belts 20.

The shaft 24 and, consequently, the belts 20, is driven by an electric gear motor 34 mounted on the frame 10 below the top panel 13, through a suitable drive 35, which may, for example, include a chain-and-sprocket drive. A circular knife 36 is rotatably mounted below the top panel 13, so that the upper part of the knife extends upwardly through a slot 37 in the top panel 13 and an aligned opening or slot in the bottom part of the channel member 12, so that the upper part of the knife 36 extends into the channel 15 along the central plane thereof. The knife 36 is rotatably mounted in a mounting structure 38 which is connected to a transverse bracing 39 of the frame 10 by means of a hinge connection 40. The angular position of the mounting structure 38 and, consequently, the level of the upper part of the knife 36 within the channel 15 may be adjusted, and the structure 38 may be maintained in the desired position by means of a bracket 41, which is fastened to a transverse bracing 42 of the frame 10. The bracket 41 may embrace the mounting structure 38 and be releasably connected thereto by releasable locking means, which may, for example, comprise locking pins 43, which may be inserted in any of a number of corresponding holes formed in the structure 38. The knife 36 may be rotated by an electric motor 44 through a belt drive 45, and the motor 44 is mounted on a mounting plate 46 connected to a transverse bracing 47 of the frame 10 by a hinge 48. The mounting plate 46 and the motor 44 mounted thereon is biased downwardly by a coil spring 49 extending between the free end of the mounting plate 46 and the bracing 42, whereby tension of the belt drive 45 may be maintained substantially unchanged when the level of the knife 36 is adjusted.

The apparatus parts positioned above the top panel 13 may be covered by a hood or cover 50, which is connected to the frame 10 by means of a pair of hinges 51. The cover or hood 50 has an end opening 52 so that the forward, circular bend 17 of the supporting rail 16 and the adjacent end of the channel 15 is accessible. The opposite sides of the frame 10 may also be closed by side panels 53, which are hinged to the frame by means of hinges 54 and provided with a locking member 55.

The apparatus described above and shown in Figs. 1 and 2 operates as follows:

When the electric motors 34 and 44 are energized, the belts are moved in a direction indicated by an arrow 56 in Fig. 1, and the knife 36 is rotated. Fish heads to be cut may now successively be positioned in the channel 15 with their nape and scull portions facing downwardly, while the circular bend 17 of the supporting rail 16 is inserted into the mouth opening of each fish head. Laterally extending parts of the fish head will now come into engagement with the spikes 30 of the moving belts 20, so that each fish head is moved along the channel 15 while encircling the rail 16, which supports the chin portion of the fish head at a predetermined level. When the fish head passes the rotating knife 36, it will be cut longitudinally. If the knife is adjusted so that its upper part is positioned immediately below the rail 16, only the nape and scull portions are cut, and when the cut fish head passes the cutting edge 19 of the plate 18 with the chin portion stretched between the lower runs of the belts 20, the gills are cut from the chin and cheek portion. The cut fish heads leaving the supporting rail 16 may fall down through a chute 57, which may, for example, pass the treated fish heads to a conveyor belt 58 moving the heads to a storage site or to a location for possible further treatment.

The knife 36 may be adjusted so that the upper part thereof extends above the level of the rail 16. In that case each fish head passing the knife is split in two parts. As mentioned above, the supporting rail 16 may be fixedly mounted in relation to the frame 10, while the channel member 12 is resiliently supported by the coil springs 14. This means that the vertical distance between the rail 16 and the surfaces defining the channel 15 is automatically adjusted and adapted to the sizes of the fish heads being treated.

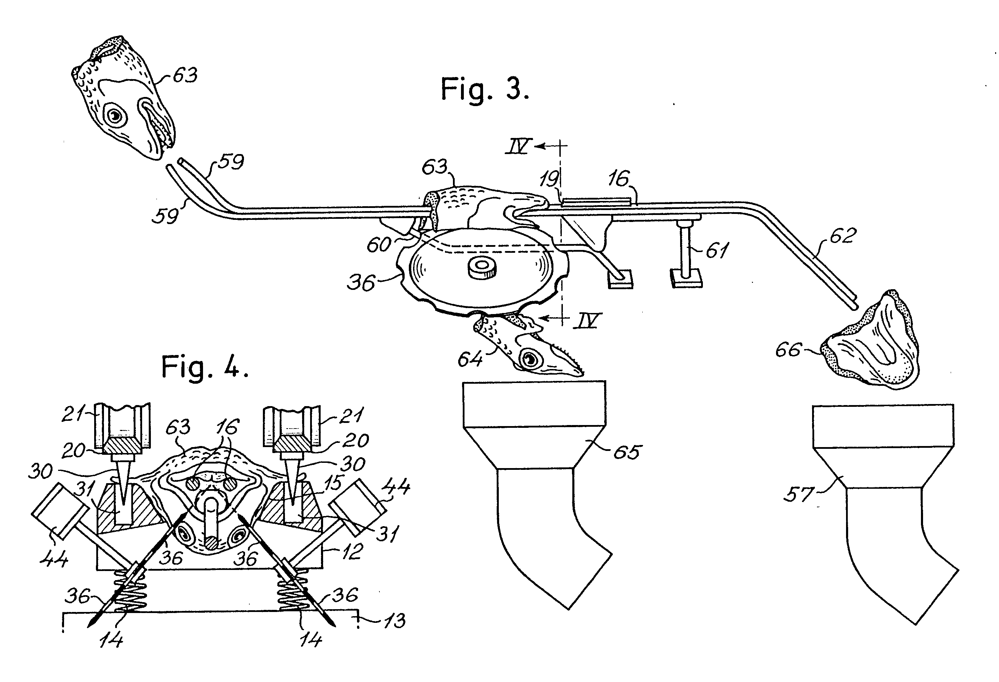

Figs. 3 and 4 illustrate a modified embodiment of the head supporting rail 16 and the arrangement of the circular cutting knife 36, and in Figs. 3 and 4 the parts corresponding to similar parts in Figs 1 and 2 have been designated the same reference numerals.

In Figs. 3 and 4 the head supporting rail 16 has an upwardly inclined, bifurcated forward or inlet end with two laterally spaced arms 59, and the rail 16 is fixedly mounted on the frame 10 (not shown in Fig. 3) by means of mounting members 60 and 61. The rail member 16 ends into a downwardly inclined discharge end 62, which is directed towards the inlet opening of the chute 57.

As shown in Fig. 4 the single, centrally arranged knife 36 used in connection with the embodiment of Figs. 1 and 2, are replaced by a pair of obliquely arranged, circular knives 36 forming therebetween an acute or almost right angle having its apex positioned adjacent to the rail 16. The knives 36 may be individually driven by electric motors 44 as indicated in Fig. 4, or the two knives may be driven by a common electric motor through a suitable drive.

A fish head 63 to be cut may be fed into the apparatus with the chin portion facing upwards, and the arms 59 of the bifurcated end of the supporting rail 16 is then inserted into the mouth opening of the head 63. The arms 59 will then come into engagement with the gills of the fish head, and the spikes 30 of the belts 20 engage with laterally extending parts of the head. As the head 63 is forcibly moved along the channel member 12 by means of the belts 20, the gills will be retained by the arms 59 and torn off from the chin and cheek portion of the head 63. When the fish head 63 passes the obliquely positioned cutting knives 36, the nape and scull portion 64 of the fish head with attached gills will be cut and separated from the fish head, and, thereafter, this separated portion may fall down into a chute 65, which may pass it to a desired receptable or conveyor, now shown. As shown in Fig. 3 the mounting member 60 may be positioned between the knives 36 and shaped so as to function as a fish head distending member, which is passed into the mouth opening of the fish head and distends the fish head in a vertical direction, whereby a more accurate cutting of the head may be obtained. The remaining chin and cheek portion 66 continues its movement along the rail 16 past the cutting edge 19, which cut possible gill residues from the chin and cheek portion 66. When the latter has reached the discharge end 62 of the rail 16, it is disengaged from the spikes 30 of the belts 20 and falls down into the chute 57. Thus, the modified embodiment of the apparatus illustrated in Figs. 3 and 4 makes it possible to obtain a mechanical separation of a fish head 63 into a nape and scull portion 64 freed from gills, and a chin and cheek portion 66. Thereby it is possible to obtain a higher degree of utilization of fish heads, which may otherwise be considered more or less without value.

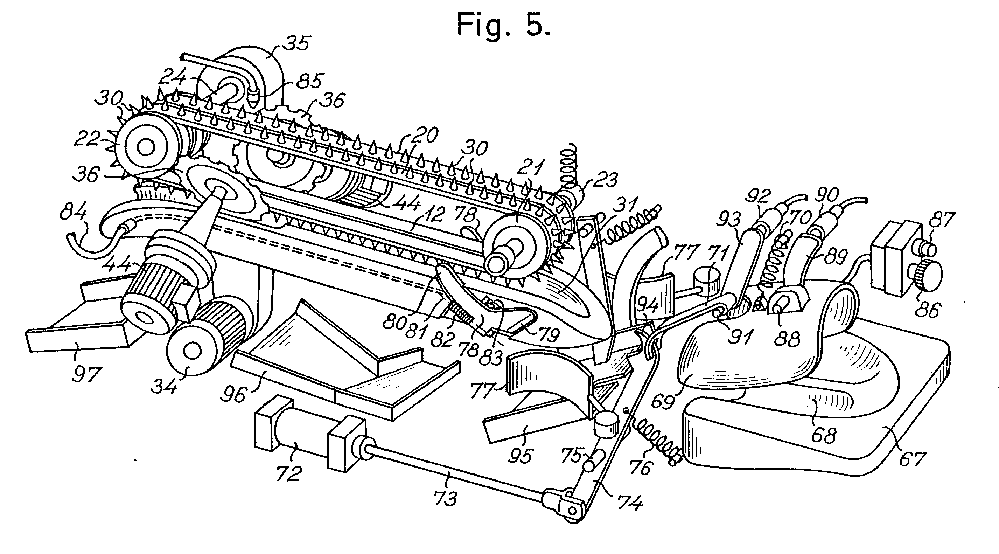

In Fig. 5 the parts corresponding to similar parts in Figs. 1—4 have been designated the same reference numerals. In the embodiment shown in Fig. 5 the channel member 12 has such a cross-section that the fish heads to be cut may be threaded on the channel member at a pointed end thereof. The fish heads may then be moved along the channel member 12 by means of the driving belts 20 which are arranged above the upwardly open channel or groove 31 of the channel member so that the spikes 30 on the lower runs of the belts 20 may extend into the channel or groove 31. In this embodiment the circular knives 36 are arranged above the channel member 12 adjacent to the outlet end thereof, and the lower part of the knives 36 extend downwardly into the channel or groove 31, and the knives 36 are arranged so as to diverge in an upward direction.

The apparatus shown in Fig. 5 comprises a head feeding device including a feeding tray 67 with a fish head receiving depression 68. A swingably mounted cover plate 69 is arranged above the tray 67 and biased towards a starting position by means of a biasing spring 70. The tray 67 and the cover plate 69 define therebetween a head receiving gap, and a feeler arm 71 extends downardly at the inner end of the this gap. A transfer mechanism for transferring a fish head from the tray 67 to the channel member 12 comprises a pneumatic cylinder 72 with a piston rod 73 which is pivotally connected to the lower end of a lever 74. The lever 74 is swingable about a pivot 75 and biased towards a retracted position by means of a biasing spring 76. Swingably mounted guide plates 77 are arranged between the feeding tray 67 and the adjacent end of the channel member 12 at either side of this channel member. A pair of gill cutting members 78 are swingably mounted on opposite sides of the channel member 12. Each cutting member 78, which comprises a cutting edge 79 and an upwardly extending actuating arm 80 is swingable about an obliquely extending axis 81 and biased towards a retracted position by means of a biasing spring 82 positioned around the axis. A water jet nozzle 83 is arranged at each of the gill cutting members 78, and water may be supplied to these nozzles through water supply conduits 84. The apparatus may also comprise one or more water spray nozzles 85 for spraying rinsing water onto the cutting knives 36.

The apparatus may be switched on and off by means of a switch button 86, and the function of the apparatus may also be stopped immediately by means of an emergency stop button 87. When the apparatus is switched on by means of the button 86 the electric motors 34 and 44 are energized so that the circular knives 36 are rotating and the spiked belts 20 are moving. The operator may now insert a fish head in the depression 68 of the feeding tray 67 whereafter the cover plate 69 is tilted about a pivot 88 so as to push the fish head further into the apparatus. An upwardly extending arm which is formed on the over plate 69 cooperates with a photoelectric cell 90 for detecting such tilting of the cover plate against the bias of the spring 70. The tilting of the cover plate 69 cause the fish head to move into engagement with the feeler arm 71 and to swing the same clockwise about a pivot 91, and this swinging movement is detected by a photoelectric cell 92 which cooperates with an arm 93 formed integrally with the feeler 71. When the photoelectric cells 90 and 92 have ascertained that the inlet passage defined between the feeding tray 67 and the cover plate 69 is closed and that a fish head is moved into engagement with the feeler arm 71, the cylinder 72 is caused to move the piston rod 73 to an extended position, whereby the lever 74 is swung counter-clockwise about the pivot 75. The lever 74 has a hook-shaped upper free end, and when the lever is swung counter-clockwise by the cylinder 72, the hook 74 will grip the fish head and move it along the path defined between the guide plate 77 from the tray 67 and thread it on the adjacent pointed end of the channel member 12. The fish head will then come into engagement with the spikes 30 of the belts 20 which will move the fish head along the channel member 12. When the forward end of the fish head encircling the channel member 12 comes into contact with the actuating arms 80, the gill cutting members 78 are swung downwardly and outwardly about the axis 81 against the bias of the spring 82. This causes the cutting edges 79, which are already located within a tubular fish head, to swing outwardly and cut the gills. The inner surface of the fish head may be flushed and the separation of the gills from the fish head may be facilitated by means of water jets from the nozzles 83. When the fish head has passed the cutting members 78 they may return to their retracted positions under the bias of the springs 82, and another fish head may be inserted in the tray 67. Flushing water and other waste material may fall down on a chute 95 arranged below the cutting members 78.

When the fish head is moved further along the channel member 12 and passes the rotating circular knives 36, the nape and scull portion of the fish head is cut from the chin and cheek portion. The chin and cheek portion which is positioned around the lower part of the channel member 12, may fall on a chute 96, while the nape and scull portion may move further along the upper side of the channel member to the free end thereof where it may fall down on a chute 97.

### Example

The diameter of the cutting knife or the cutting knives 36 may, for example be in the range from 140 to 420 mm and rotate with a speed of 1500—6000 rpm. The spike belts 20 may then be moved at a rate of 30—100 m per minute, and it will then be possible to cut 1200—1500 fish heads per hour.

It should be understood, that various modifications of the embodiments described above may be made within the scope of the present invention as defined in the appended claims. Thus, for example, the circular, rotating knife or knives may be replaced by a reciprocating knife or by reciprocating knives.

### Claims

1. An apparatus for cutting fish heads (63), said apparatus comprising:
   elongated guide means (12, 16);
   means (20) for consecutively moving the fish heads in their longitudinal direction along a path defined by said guide means (12, 16); and
   cutting means (36) extending into the path of movement of the fish heads so as to cut the respective fish heads longitudinally when passing the cutting means (36); characterised in that
   the elongated guide means comprise a rod member (16) having a cross-sectional shape such that the fish heads may be threaded thereon via their mouths.

2. An apparatus according to claim 1, wherein the guide means comprise an elongated member (12) defining a channel (15) therein for slidingly receiving at least part of each fish head.

3. An apparatus according to claim 2, wherein the head supporting rod (16) extends opposite to and along the channel (15) in substantially parallel relationship therewith, so as to allow the fish heads on the rod (16) to slide along the rod when they are moved along the channel by the moving means (20).

4. An apparatus according to claim 2 or 3, wherein the cutting means (36) extend upwardly into the channel (15) through a first slot or opening defined in a bottom wall of the channel member (12).

5. An apparatus according to any of the claims 1 to 4, wherein the moving means comprise at least one endless belt or chain (20) extending along the elongated member (12), said belt or chain having spikes (30) extending from the outer surfaces thereof for engaging with adjacent portions of the fish heads moving along said elongated member (12).

6. An apparatus according to claim 5, wherein at least one longitudinally extending groove or slot (31) is defined in the elongated member (12) for receiving the outer free ends of the spikes (30) on the adjacent run of the belt or chain (20).

7. An apparatus according to any of the claims 3 to 6, wherein the guide means comprise head distending means (60) located adjacent to the cutting means (36) for distending the fish heads when passing the cutting means.

8. An apparatus according to any of the claims 4 to 7, wherein the cutting means (36) extend further upwardly into a second opening or slot aligned with said first opening or slot (31) and defined in the rod (16).

9. An apparatus according to any of the claims 3 to 8, wherein the free end (59) of the rod (16) at which the fish heads are threaded thereon, is bifurcated.

10. An apparatus according to any of the claims 3 to 9, wherein the free end portion (17, 59) of the supporting rod (16), where the heads (63) are threaded on the rod, are inclined upwardly.

11. An apparatus according to any of the claims 3 to 10, wherein the channel member (12) is mounted by resilient supporting means (14), whereby the transverse distance between the rod (16) and the channel member (12) may be increased by overcoming the bias of the resilient supporting means (14).

12. An apparatus according to claims 1 and 6, wherein the cutting means (36) extends into said groove or slot (31) through the outer opening thereof.

13. An apparatus according to any of the claims 1 to 12, wherein the cutting means comprise a pair of cutting knives (36) defining an angle therebetween for cutting the nape and scull portion (64) from each fish head.

14. An apparatus according to any of the claims 1 to 13, wherein said cutting means comprise at least one circular, rotatable knife (36).

15. An apparatus according to any of the claims 1 to 14, wherein the cutting means further comprise means (19, 78—83) for separating gills from each fish head.

16. An apparatus according to claim 15, wherein the gill separating means comprise a cutting edge (19) located at the upper side of the rail (16) for cutting the gills adjacent to the chin and cheek portion of the fish heads (63) passing along the rod.

17. An apparatus according to claims 1 and 15, wherein the gill separating means comprise a pair of gill cutting members (78) arranged on either side of the elongated channel member (12) so as to be movable between a retracted inoperative position and an extended cutting position.

18. An apparatus according to claim 17, wherein the gill cutting members are spring biased towards their retracted position and each comprises an actuating arm (80) for moving the cutting member to its extended cutting position when the arm is engaged by the leading end of a fish head moving along the channel member (12).

19. An apparatus according to claim 17 or 18, wherein said gill separating means comprise water jet nozzles (83) for providing a water jet facilitating the engagemnt of the cutting members with the gills of the fish heads.

**Patentansprüche**

1. Vorrichtung zum Zerschneiden von Fischköpfen (63), die Vorrichtung enthaltend:
eine langgestreckte Führungseinrichtung (12, 16);
eine Einrichtung (20) zum aufeinanderfolgenden Bewegen der Fischköpfe in ihrer Längsrichtung längs eines Weges, der von der Führungseinrichtung (12, 16) beschrieben ist; und
eine Schneidvorrichtung (36), die sich in den Bewegungsweg der Fischköpfe erstreckt, um die jeweiligen Fischköpfe in Längsrichtung zu zerschneiden, wenn sie an der Schneidvorrichtung (36) vorbeilaufen, dadurch gekennzeichnet, daß
die langgestreckte Führungseinrichtung ein Stangenelement (16) enthält, das eine solche Querschnittsgestalt hat, daß die Fischköpfe darauf durch ihre Mäuler aufgefädelt werden können.

2. Vorrichtung nach Anspruch 1, bei der die Führungseinrichtung ein langgestrecktes Element (12) ist, das einen Kanal (15) darin zum gleitenden Aufnehmen wenigstens eines Teiles eines jeden Fischkopfs definiert.

3. Vorrichtung nach Anspruch 2, bei der die Kopftragstange (16) sich gegenüber dem und längs des Kanals (15) im wesentlichen parallel dazu erstreckt, um es den Fischköpfen, die auf die Stange (16) aufgefädelt sind, zu ermöglichen, längs der Stange zu gleiten, wenn sie längs des Kanals von der Bewegungseinrichtung (20) bewegt werden.

4. Vorrichtung nach Anspruch 2 oder 3, bei der die Schneidvorrichtung (36) sich nach oben in den Kanal (15) durch einen ersten Schlitz oder Durchbruch erstreckt, der in einer Bodenwand des Kanalelements (12) ausgebildet ist.

5. Vorrichtung nach einem der Ansprüche 1 bis 4, bei der die Bewegungseinrichtung wenigstens einen endlosen Riemen oder Kette (20) aufweist, der bzw. die sich längs des langgestreckten Elements (12) erstreckt, wobei der Riemen oder die Kette Dorne (30) aufweist, die sich von den Außenseiten desselben bzw. derselben erstrecken, um mit benachbarten Abschnitten der Fischköpfe in Eingriff zu gelangen, die sich längs des langgestreckten Elements (12) bewegen.

6. Vorrichtung nach Anspruch 5, bei der wenigstens eine sich in Längsrichtung erstreckende Rille oder Schlitz (31) in dem langgestreckten Element (12) ausgebildet ist, um die äußeren freien Enden der Dorne (30) an dem benachbarten Trum des Riemens oder der Kette (20) aufzunehmen.

7. Vorrichtung nach einem der Ansprüche 3 bis 6, bei der die Führungseinrichtung eine Kopfspreizeinrichtung (60) aufweist, die benachbart der Schneidvorrichtung (36) angeordnet ist, um die Fischköpfe aufzuweiten, wenn sie an der Schneidvorrichtung vorbeilaufen.

8. Vorrichtung nach einem der Ansprüche 4 bis 7, bei der die Schneidvorrichtung (36) sich weiter nach oben in einen zweiten Durchbruch oder Schlitz erstreckt, der auf den ersten Durchbruch oder Schlitz (31) ausgerichtet ist und in der Stange (16) ausgebildet ist.

9. Vorrichtung nach einem der Ansprüche 3 bis 8, bei der das freie Ende (59) der Stange (16), an der die Fischköpfe darauf aufgefädelt werden, gegabelt ist.

10. Vorrichtung nach einem der Ansprüche 3 bis 9, bei der der freie Endabschnitt (17, 19) der Tragstange (16), wo die Köpfe (63) auf die Stange aufgefädelt werden, nach oben geneigt ist.

11. Vorrichtung nach einem der Ansprüche 3 bis 10, bei der das Kanalelement (12) von einer elastischen Trageinrichtung (14) gehalten ist, wodurch die Querdistanz zwischen der Stange (16) und dem Kanalelement (12) vergrößert werden kann, indem die Vorspannung der elastischen Trageinrichtung (14) überwunden wird.

12. Vorrichtung nach einem der Ansprüche 1 und 6, bei der die Schneidvorrichtung (36) sich in die Rille oder den Schlitz (31) durch den äußeren Durchbruch erstreckt.

13. Vorrichtung nach einem der Ansprüche 1 bis 12, bei der die Schneidvorrichtung zwei Schneidmesser (36) enthält, die zwischen sich einen Winkel einschließen, um den Nacken- und Schädeldeckenabschnitt (64) von jedem Fischkopf abzuschneiden.

14. Vorrichtung nach einem der Ansprüche 1 bis 13, bei der die Schneidvorrichtung wenigstens ein kreisförmiges, drehbares Messer (36) enthält.

15. Vorrichtung nach einem der Ansprüche 1 bis 14, bei der die Schneidvorrichtung weiterhin eine Einrichtung (19, 78—83) zum Abtrennen der Kiemen von jedem Fischkopf enthält.

16. Vorrichtung nach Anspruch 15, bei der die Kiemenabtrenneinrichtung eine Schneidkante (19) ist, die an der Oberseite der Schiene (16) angeordnet isdt, um die Kiemen benachbart dem Kinn- und Backenabschnitt der Fischköpfe (63) abzuschneiden, die längs der Stange vorbeilaufen.

17. Vorrichtung nach den Ansprüchen 1 und 15, bei der die Kiemenabtrenneinrichtung ein Paar Kiemenschneidelelemente (78) enthält, die zu beiden Seiten des langgestreckten Kanalelements (12) derart angeordnet sind, daß sie zwischen einer zurükgezogenen, unwirksamen Stellung und einer vorgeschobenen Schneidstellung beweglich sind.

18. Vorrichtung nach Anspruch 17, bei der die Kiemenabschneidelemente in ihre zurückgezogene Stellung federvorbelastet sind und jedes einen Betätigungsarm (80) zum Bewegen des Schneidelements in seine ausgefahrene Schneidstellung umfaßt, wenn der Arm sich im Eingriff mit dem vorderen Ende eines Fischkopfes befindet, der sich längs des Kanalelements (12) bewegt.

19. Vorrichtung nach Anspruch 17 oder 18, bei der die Kiemenabtrenneinrichtung Wasserstrahldüsen (83) aufweist, um einen Wasserstrahl bereitzustellen, der den Eingriff der Schneidelement mit den Kiemen der Fischköpfe erleichtert.

**Revendications**

1. Un appareil pour coupler les têtes de poisson (63), ledit appareil comprenant:

des moyens de guidage allongés (12, 16);

des moyens (20) pour déplacer consécutivement les têtes de poisson dans leur sens longitudinal selon un trajet défini par les moyens de guidage (12, 16); et

des moyens de coupe (36) s'étendant sur le trajet en déplacement des têtes de poisson de façon à couper longitudinalement les têtes de poisson lorsqu'elles passent au niveau des moyens de coupe (36); caacterisé en ce que les moyens de guidage allongés comprennent un élément en forme de tige (16) dont la section a une forme telle que les têtes de poisson peuvent être enfilées sur lui par la voie de leurs bouches.

2. Un appareil conforme à la revendication 1 dans lequel les moyens de guidage comprennent un élément allongé (12) qui délimite un canal (15) pour recevoir par glissement au moins une partie de chaque tête de poisson.

3. Un appareil conforme à la revendication 2, dans lequel l'élément en forme de tige (16) de support de têtes s'étend en face et le long du canal (15) et sensiblement parallèle à ce denier, de façon à permettre aux têtes de poisson enfilées sur la tige (16) de coulisser le long de la tige (16) lorsque les moyens de déplacement (20) les déplacent le long du canal.

4. Un appareil conforme à revendication 2 ou 3, dans lequel les moyens de coupe (36) s'étendent vers le haut dans le canal (15) à travers une première fente ou ouverture délimitée dans une paroi du fond de l'élément en forme de canal (12).

5. Un appareil conforme à l'une quelconque des revendications 1—4, dans lequel les moyens de déplacement comprennent au moins une chaîne ou courroie sans fin (20) s'étendant le long de l'élément allongé (12), ladite courroie ou chaîne ayant des pointes (30) faisant saillie de ses surfaces extérieures pour s'engager dans les portions adjacentes des têtes de poisson de déplaçant le long dudit élément allongé (12).

6. Un appareil conforme à la revendication 5, dans lequel au moins une rainure ou fente (31) s'étendant dans le sens longitudinal est délimitée dans l'élément allongé (12) pour recevoir les extrêmités extérieures libres des pointes prévues (30) sur le brin adjacent de la chaîne ou de la courroie (20).

7. Un appareil conforme à l'une quelconque de revendications 3—6, dans lequel les moyens de guidage comprennent des moyens (60) de distension des têtes de poisson placé de façon adjacente aux moyens de coupe (36) pour distendre les têtes de poisson lorsqu'elles passent au niveau des moyens de coupe.

8. Un appareil conforme à l'une quelconque des revendications 4—7, dans lequel les moyens de coupe (36) s'étendent en outre vers le haut dans une seconde ouverture ou fente alignée sur ladite première ouverture ou fente (31) délimitée dans la tige (16).

9. Un appareil conforme à l'une quelconque des revendications 3—8, dans lequel l'extrêmité libre (5) de la tige (16) sur laquelle sont enfilées les têtes de poisson, est divisée en deux branches.

10. Un appareil conforme à l'une quelconque des revendications 3—9, dans lequel les portions de l'extrêmité libre (17, 59) de la tige support (16), où les têtes (63) sont enfilées sur la tige, sont inclinées vers le haut.

11. Un appareil conforme à l'une quelconque des revendications 3—10, dans lequel l'élément en forme de canal (12) est monté sur des moyens de support élastiques (14), de sorte que l'on peut augmenter la distance transversale qui sépare la tige (16) et l'élément de canal (12) en surmontant la poussée de ces moyens de support élastiques (14).

12. Un appareil conforme aux revendications 1 et 6, dans lequel les moyens de coupe (36) s'étendent dans ladite rainure ou fente (31) en passant à travers son ouverture extérieure.

13. Un appareil conforme à l'une quelconque des revendications 1—12, dans lequel les moyens de coupe comprennent une paire de couteaux de coupe (36) disposés selon un certain angle l'un par rapport à l'autre, pour détacher de chaque tête de poisson la portion (64) correspondant à la nuque et à la crâne.

14. Un appareil conforme à l'une quelconque des revendications 1—13, dans lequel lesdits moyens de coupe comprennent au moins un couteau (36) circulaire et rotatif.

15. Un appareil conforme à l'une quelconque des revendications 1—14, dans lequel les moyens de coupe comprennent en outre des moyens (19, 78—83) pour séparer les branchies de chaque tête de poisson.

16. Un appareil conforme à la revendication 15, dans lequel les moyens de séparation des branchies comprennent un bord coupant (19) placé sur le dessus de la tige (16) et destiné à couper les branchies adjacentes à la portion du menton et des joues des têtes de poisson (63) qui suivent la tige.

17. Un appareil conforme aux revendications 1 et 15, dans lequel les moyens de séparation des branchies comprennent une paire d'éléments de coupe de branchies (78) disposés de chaque côté de l'élément allongé en forme de canal (12) pour pouvoir être déplacés entre une position rétractée non opérationelle et une position de coupe en saillie.

18. Un appareil conforme à la revendication 17, dans lequel les éléments de coupe de branchies sont poussés par ressort vers leur position rétractée et comprennent chacun un bras de commande (80) pour faire passer l'élément de coupe dans sa position de coupe en saillie lorsque le bras entre en contact avec l'extrêmité antérieure d'une tête de poisson qui se déplace le long de l'élément en forme de canal (12).

19. Un appareil conforme à la revendication 17 ou 18, dans lequel lesdits moyens de séparation des branchies comprennent des buses (83) à jet d'eau pour fournir un jet d'eau facilitant l'engagement des éléments de coupe avec les branchies des têtes de poisson.

Fig. 1.

Fig. 2.

Fig. 3.

Fig. 4.

0 110 319

Fig. 5.